Europäisches Patentamt

European Patent Office

Office européen des brevets

(11) Veröffentlichungsnummer : **0 149 212**
B1

(12) **EUROPÄISCHE PATENTSCHRIFT**

(45) Veröffentlichungstag der Patentschrift :
28.03.90

(21) Anmeldenummer : 84116082.3

(22) Anmeldetag : 21.12.84

(51) Int. Cl.⁵ : **B 22 C   7/02**, B 29 C 67/22//
B29K25/00

(54) Verfahren zur Herstellung von aus expandierten Schaumstoffperlen bestehenden, verlorenen Giessmodellen für das Vollformgiessverfahren, vorzugsweise zur Fertigung von Seriengussteilen.

(30) Priorität : 30.12.83 DE 3347616

(43) Veröffentlichungstag der Anmeldung :
24.07.85 Patentblatt 85/30

(45) Bekanntmachung des Hinweises auf die Patenterteilung : 28.03.90 Patentblatt 90/13

(84) Benannte Vertragsstaaten :
AT CH DE FR GB IT LI

(56) Entgegenhaltungen :
DE--A-- 3 115 773
FR--A-- 1 490 217
US--A-- 4 272 469
FOUNDRY TRADE JOURNAL, Band 145, Nr. 3141, Juli 1978, Seiten 149-158, Redhill, Surrey, GB; A.J. CLEGG: "The full-mould process - a review"

(73) Patentinhaber : Grünzweig + Hartmann Aktiengesellschaft
Bürgermeister-Grünzweig-Strasse 1-47
D-6700 Ludwigshafen am Rhein (DE)

(72) Erfinder : Bissinger, Fridolin
Wittelsbachstrasse 11
D-6700 Ludwigshafen (DE)
Erfinder : Krzyzanowski, Erich
Ormsheimer Hof 7b
D-6710 Frankenthal (DE)

(74) Vertreter : Kuhnen, Wacker & Partner
Schneggstrasse 3-5 Postfach 1553
D-8050 Freising (DE)

## Beschreibung

Die Erfindung betrifft ein Verfahren zur Herstellung von aus expandierten Schaumstoffperlen bestehenden, verlorenen Gießmodellen für das Vollformgießen, vorzugsweise zur Fertigung von Seriengußteilen, nach dem Oberbegriff des Anspruchs 1.

Es sind bereits verschiedene Verfahren zur Herstellung von Glußstücken unter Verwendung bei höherer Temperatur vergasbarer Modelle bekannt. Diese Verfahren sind unter dem Begriff Vollformgießen zusammengefaßt und weisen das gemeinsame Merkmal auf, das das Modell durch die einfließende Schmelze « aufgefressen » wird, wobei die Gießgeschwindigkeit zweckmäßig so eingerichtet wird, daß Hohlräume zwischen der einfließenden Schmelze und dem schwindenden Modell möglichst vermieden werden. Dem Kunststoff für das verlorene Modell, zumeist Polystyrol, wird in der Regel ein strahlungsabsorbierender Farbstoff zugesetzt, um die Vergasung des Modells vor der einfließenden Schmelze zu fördern. Für exakte Abgüsse ist es im allgemeinen erforderlich, den Formsand sorgfältig zu verfestigen oder mit Bindemitteln zu versehen.

Obgleich nun das Vollformgießen sich inzwischen seinen festen Platz unter den Gießverfahren erobert hat und bei der Herstellung großer Einzelgußstücke das zur Zeit wirtschaftlichste Verfahren ist, konnte es sich beim Serien- und Massenguß noch nicht vollständig durchsetzen. Dies auch deshalb, weil aus den nachstehend erläuterten Gründen eine für alle Anwendungen zufriedenstellende Oberflächenqualität nicht ohne weiteres erzielt werden konnte.

Der leicht vergasbare Kunststoff für verlorene Modelle wird in Form kleiner massiver, mit einem Treibmittel versetzter Perlen bezogen. Das Einbringen des Treibmittels erfolgt in der üblichen Weise durch die chemische Industrie. Dieses Vorprodukt mit einem Raumgewicht in der Größenordnung von 600 kg/m³ wird sodann unter der Einwirkung von Wärme zu einem aus expandierten Perlen oder Körnern bestehenden Granulat vorgeschäumt, das lediglich noch ein Raumgewicht von 20 kg/m³ oder weniger besitzt. Das so vorgeschäumte Granulat wird dann in ebenfalls üblicher Weise mit Trägerluft in eine Schäumform eingebracht, bis es diese mit gutem Füllungsgrad ausfüllt, wonach zumeist durch Einleiten von Dampf eine Nachschäumung in der Schäumform erfolgt, bei der die einzelnen expandierten Schaumstoffperlen durch nochmalige, wenn auch geringe Volumenvergrößerung aneinander und an die Wände des Formhohlraums gepreßt werden, um die erforderliche gegenseitige Verbindung zu schaffen und so den Schaumstoffkörper mit der Kontur des Schäumform zu erzeugen. In der Schäumform können entweder Schaumblöcke erzeugt werden, die nach verschiedenen Arbeitsschritten wie Schnitten und/oder materialabnehmenden Bearbeitungen gegebenenfalls unter Verklebung von so erzeugten Einzelelementen zur Bildung des Modells verarbeitet werden, oder aber es wird insbesondere bei kleineren Gußstücken von vornherein die Kontur der Schäumform der Kontur des ganzen Gußstückes oder eines Teilbereichs desselben angepaßt, so daß unmittelbar in der Schäumform ein fertiges Modell oder ein fertiger Modellteil erzeugt wird. Für kleinere und kompliziert geformte Gußstücke ist die letztgenannte Arbeitsweise zur kostengünstigen Herstellung einer Vielzahl kompliziert geformter verlorener Modelle für den Serienguß von besonderer Bedeutung.

Nach dem allgemein in der Praxis angewendeten Verfahren zur Herstellung formgeschäumter Gießmodelle für das Vollformgießen besitzen die expandierten Perlen des in die Schäumform einzuführenden vorgeschäumten Granulats im Hinblick auf den Vorschäumgrad und die für die vorliegenden Zwecke üblicherweise verwendete Perlengröße des Vorprodukts einen durchschnittlichen Durchmesser von etwa 2 mm. Bei der Nachschäumung in der Schäumform werden die dicht nebeneinander liegenden, oberflächenseitigen expandierten Perlen durch den Nachschäumdruck an die glatte Wand der Schäumform gepreßt und dort unter Bildung eines im Zentralbereich jeder Perle glatten Oberflächenelements des Modells plattgefrückt. Der Zwickel zwischen den benachbarten Perlen wird dabei gegenüber der Anordnung im Schüttgut ebenfalls wesentlich verkleinert. Dennoch verbleibt zwischen benachbarten, abgeplatteten Perlen des Modells eine Zone mit gegenüber den abgeplatteten Flächen der Perlen unterschiedlicher Konsistenz, wobei sich kleine Einkerbungen in der Oberfläche im Bereich dieser Zwickel in der Regel nicht vermeiden lassen.

Insbesondere bei empfindlichen Modellen, etwa mit dünnen Wandungen muß zur Ermöglichung einer störungsfreien und beschädigungsfreien Manipulation eine Beschichtung mit einem erstarrenden Überzug erfolgen; ein solcher Überzug aus feuerfestem, beispielsweise keramischem Material, häufig mißverständlich als Schlichte bezeichnet, ist auch erforderlich, wenn in der Gießform ein Formstoff verwendet wird, der gegenüber der Schmelze nicht ausreichend temperaturbeständig ist und daher vor deren unmittelbarer Berührung geschützt werden muß, beispielsweise Quarzsand oder Stahlgranulat bei der Herstellung von Stahlguß. Das Überzugsmaterial dringt beim Auftragen auf die Oberfläche des Modells in oberflächenseitige Hohlräume oder Störstellen, insbesondere im Bereich zwischen benachbarten, aneinandergepreßten Perlen ein und bildet somit auf seiten des Gußteils, das an der Stelle des Schaummodells erzeugt wird, eine unregelmäßige Oberfläche. Beim Abguß vergast das Schaumstoffmaterial des Modells, während die entsprechende, an der vorherigen Modelloberfläche ausgeformte Kontur des Überzugsmaterials stehen bleibt. Jegliches Eindringen des Überzugsmaterials in die Oberfläche des Schaumstoffmodells bleibt somit am Gußstück als Vertiefung erhalten. Im Einzelfall ist erst nach dem Guß festzustellen, welche Vertiefungen bzw. welche Rauhigkeit die Oberfläche aufweist, da nach dem Aufbringen des Überzugsmaterials eine genaue Untersuchung der Modelloberfläche nicht mehr möglich ist, weil dann von außen lediglich die mit der Schmelze nicht in berührung gelangende Oberfläche des Überzugsmaterials sichtbar ist.

Daher ist es für am Gußstück zu erzeugende Oberflächen hoher Qualität und Maßhaltigkeit erforderlich, daß das Überzugsmaterial für das Schaumstoffmodell eine glatte, von Poren oder gar von Fehlstellen möglichst vollständig freie Oberfläche des Schaumstoffs mit Gewißheit vorfindet. Abgesehen von einer häufig aus sonstigen Gründen gewünschten, möglichst glatten Oberfläche sind derartige glatte Oberflächen insbesondere im Bereich besonders geringer Wandstärken von ausschlaggebender Bedeutung, um am Gußstück die dünne Wand mit homogener Stärke und ohne Schwachstellen zu erhalten.

Eine Möglichkeit, die Oberflächenqualität des Modells zu verbessern, bestünde darin, expandierte Perlen möglichst geringen Durchmessers zu erzeugen, da die Fehlstellen oder Unstetigkeiten zwischen benachbarten Perlen um so kleiner sind und um so weniger ins Gewicht fallen, je kleiner die Größe der Perlen des Schaumstoffmodells ist. Daher zeigt die EP-B-0 149 211 derselben Anmelderin einen Weg auf, wie für das Vollformgießen expandierte Perlen mit besonders geringem Durchmesser und dennoch mit für den Nachschäumvorgang ausreichendem Treibmittelgehalt hergestellt werden können. Eine solche Feinperligkeit des expandierten Granulats ergibt alleine wegen des geringeren Perlendurchmessers eine bessere Oberfläche und ist insbesondere für die Erzeugung geringer Wandstärken des Modells von besonderer Bedeutung, da Perlen entsprechend geringen Durchmessers sich beim Füllen eines entsprechenden Formhohlraumes geringen Querschnitts weniger gegenseitig stören als Perlen größeren Durchmessers. Auch im Rahmen der vorliegenden Erfindung ist die Lehre der genannten EP-B-0 149 211 zusätzlich mit besonderem Vorteil anwendbar, so daß wegen weiterer Einzelheiten ausdrücklich auf die genannte EP-B-0 149 211 Bezug genommen wird.

Zur Erzielung einer möglichst glatten Oberfläche könnte unabhängig von der Perlengröße weiter daran gedacht werden, den Nachschäumdruck zu erhöhen. Hierzu wäre es jedoch erforderlich, die expandierten Perlen mit sehr hohem Treibmittelgehalt für die Nachschäumung zur Verfügung zu stellen, was abgesehen von sonstigen Problemen jedenfalls zu einer entsprechenden Vergrößerung der Perlengröße gegenüber sonst verwendbaren Perlen führen würde und so eine auf diese Weise angestrebte glattere Oberfläche zumindest teilweise wieder dadurch verhindern würde, daß entsprechend größere Perlen verwendet werden müssen.

Ausgehend vom Stand der technik, wie er aus dem allgemein in der Praxis angewendeten Verfahren zur herstellung formgeschäumter Gießmodelle für das Vollformgießen bekannt ist, ist es daher Aufgabe der Erfindung, ein Verfahren zur Herstellung von aus expandierten Schaumstoffperlen bestehenden, verlorenen Gießmodellen für das Vollformgießen, vorzugsweise zur Fertigung von Seriengußteilen nach dem Oberbegriff des Anspruchs 1 zu schaffen, welches die Erzielung einer besonders glatten Oberfläche des Schaumstoffmodells ermöglicht.

Die Lösung dieser Aufgabe erfolgt durch die kennzeichnenden Merkmale des Anspruchs 1.

Dadurch, daß bei der Einführung des Wärmeträgermediums an der der Einführungsseite gegenüberliegenden Seite abgesaugt wird, wird die der Absaugseite benachbarte Wand des Modells zusätzlich an die Formwand angedrückt und so ein Bügeleffekt zur Glättung der Oberfläche erzielt. Weiterhin wird dadurch erreicht, daß das Wärmeträgermedium in einer definierten Strömung von der Einführungsseite zur Absaugungsseite geführt wird und eine Durchmischung mit der Luftatmosphäre im Formhohlraum minimiert wird. Dadurch erhöht sich der Druck des reinen Wärmeträgermediums, insbesondere Dampf, in vorteilhafter Weise, und wird in kurzer Zeit eine hohe Wärmeenergie auf die nachschäumenden Perlen oder Körner aufgebracht und so eine vollständige Nachschäumung unter sattem Anpreßdruck gewährleistet.

Ferner werden die Einführungsseite für das Wärmeträgermedium und die Absaugseite bei jedem Formschäumvorgang mehrmals gewechselt. Hierdurch wird zwar Wärmeträgermedium wieder abgesaugt, jedoch läßt sich der erläuterte Bügeleffekt damit an unterschiedlichen Seiten des Modells oder auch Blockes erzeugen und dort eine entsprechende Glättung der Oberfläche erzielen. Dadurch, daß beim Wechsel der Absaugseite Wärmeträgermedium zumindest zu einem Teil durch frisches Wärmeträgermedium ersetzt wird, wird die Nachschäumung weiter unterstützt.

Es wird höchstens so lange abgesaugt, bis an der Absaugseite im wesentlichen reines, frisches Wärmeträgermedium ankommt. Hierdurch wird vermieden, daß Wärmeträgermedium durch den Formhohlraum vollständig hindurchgesaugt wird und entsprechende Energieverluste auftreten.

Zwar greift die Erfindung zunächst auf Maßnahmen zurück, wie sie aus der US-A-4 272 469 bekannt sind, nämlich eine gleichzeitige Absaugung des Wärmeträgermediums an der der Einführungsseite gegenüberliegenden Seite und auf einen fakultativ angewendeten Wechsel von Einführungsseite und Absaugseite. Jedoch betrifft die US-A-4 272 469 zum einen eine andere Gattung, nämlich Gebrauchsartikel, wie z. B. Verpackungsmaterialien und zum anderen dient der einmalige, fakultative Wechsel lediglich zur möglichst vollständigen Nutzung des Treibmittels für die Nachschäumung und nicht der Erzielung möglichst glatter Oberflächen, wie im Falle der vorliegenden Erfindung, zumal sich eine solche Aufgabenstellung bei der Herstellung von formgeschäumten Gebrauchsartikeln naturgemäß nicht ergibt.

Gemäß Anspruch 2 wird in bevorzugter Weiterbildung der Erfindung vorgeschlagen, daß nach vollständiger Nachschäumung für eine vorbestimmte Verweilzeit ein Unterdruck im Formhohlraum erzeugt wird. Dies kann einfach dadurch erfolgen, daß die Einlässe für Wärmeträgermedium geschlossen und sämtliche Sauganschlüsse im Saugbetrieb betrieben werden. Hierdurch verdampft Kondensat des dampfförmigen Wärmeträgermediums an der Oberfläche und gegebenenfalls auch im Inneren der Perlen oder Körner im fertigen Modell oder Block. Der so entstandene Dampf wird zu einem entsprechenden Teil abgesaugt. Die zur Verdampfung erforderliche Verdampfungswärme wird dabei dem Schaumstoffmaterial im Formhohlraum entzogen, so daß dieses schnell abkühlt und schneller und besser aus dem Formhohlraum ausgeworfen werden kann. Diesem Verfahrensschritt einer Anlegung von Unterdruck im unmittelbaren Anschluß an die Nachschäumung kommt besondere Bedeutung auch unabhängig von der Erzielung des geschilderten Bügeleffektes zur Erzielung einer möglichst glatten Oberfläche auch deshalb zu, weil dadurch erreicht wird, daß die sogenannte Schwindmeßkurve in ihrem Vorderteil abgeschnitten wird, also ein Teil der sonst erforderlichen Alterungszeit gespart und sozusagen noch im Formhohlraum eine künstliche Anfangsalterung oder Stabilisierung herbeigeführt wird.

Diese Stabilisierung oder künstliche Alterung kann weiter gemäß Anspruch 3 dadurch unterstützt werden, daß die geschäumten Modelle in einem Wärmekanal kurzzeitig getempert werden.

Gemäß Anspruch 4 wird der Unterdruck sowohl nach Beendigung der Nachschäumung als auch im Zuge der Einführung des Wärmeträgermediums zweckmäßig im Bereich zwischen etwa 300 mbar und 800 mbar unter dem Umgebungsluftdruck gewählt, je nach der Art des verwendeten Schaumstoffmaterials.

Eine zur Durchführung des erfindungsgemäßen Verfahrens besonders bevorzugte Vorrichtung kann im wesentlichen wie ein übliches Formschäumaggregat aufgebaut sein, weist jedoch zusätzlich wenigstens einen Absauganschluß an einer Seite des Formhohlraums auf, die wenigstens annähernd der Seite des Zufuhranschlusses für das Wärmeträgermedium gegenüberliegt. Daher ergibt sich zur Durchführung des erfindungsgemäßen Verfahrens nur geringer apparativer Zusatzaufwand. Weiterhin kann der Absauganschluß auch bei dem Eintrag der vorexpandierten Perlen in den Formhohlraum zur Unterstützung der Füllung durch eine Absaugluftströmung genützt werden, sofern der Absauganschluß wenigstens annähernd auch der Einfüllseite für die vorexpandierten Perlen gegenüberliegt.

## Patentansprüche

1. Verfahren zur Herstellung von aus expandierten Schaumstoffperlen bestehenden, verlorenen Gießmodellen für das Vollformgießen, vorzugsweise zur Fertigung von Seriengußteilen, bei dem ein feinperliges treibmittelhaltiges ungeschäumtes Vorprodukt, insbesondere Polystyrol, vorgeschäumt wird, und bei dem die vorgeschäumten Schaumstoffperlen in eine vorzugsweise der Kontur des herzustellenden Gußstückes entsprechende Schäumform eingeführt und dort durch Einleitung eines Wärmeträgermediums, insbesondere Dampf, erwärmt und nachgeschäumt werden, dadurch gekennzeichnet, daß bei jedem Formschäumvorgang bei der Einführung des Wärmeträgermediums an einer der Einführungsseite gegenüberliegenden Absaugseite des Formhohlraums der Schäumform ein Unterdruck erzeugt und das Wärmeträgermedium dadurch abgesaugt wird, die Einführungsseite und Absaugseite mehrmals gewechselt werden und nach dem Wechsel höchstens so lange abgesaugt wird, bis an der Absaugseite im wesentlichen reines, frisches Wärmeträgermedium ankommt.

2. Verfahren nach Anspruch 1, dadurch gekennzeichnet, daß nach vollständiger Nachschäumung für eine vorbestimmte Verweilzeit ein Unterdruck im Formhohlraum erzeugt wird.

3. Verfahren nach Anspruch 2, dadurch gekennzeichnet, daß das geschäumte Modell in einem Wärmekanal kurzzeitig getempert wird.

4. Verfahren nach einem der Ansprüche 1 bis 3, dadurch gekennzeichnet, daß die Absaugung bei der Einführung des Wärmeträgermediums und/oder nach der vollständigen Nachschäumung unter Erzielung eines Unterdrucks von zwischen 300 mbar und 800 mbar im Formhohlraum erfolgt.

## Claims

1. Process for producing consumable casting models comprising expanded foam-material beads, for full mould casting, preferably for making mass-produced castings, in which a fine-beaded unfoamed propellant-containing initial product, in particular polystyrene, is prefoamed, and in which the prefoamed foam-material beads are introduced into a foaming mould preferably corresponding to the contour of the casting to be produced and are there warmed by introducing a heat transfer medium, in particular steam, and postfoamed, characterized in that in each mould foaming procedure an underpressure is produced when the heat transfer medium is introduced at a draw-off side of the mould cavity of the foaming mould which is opposite the introduction side and the heat transfer medium is drawn off thereby, the introduction side and draw-off side are changed repeatedly and after the change drawing off is continued until substantially clean fresh heat transfer medium comes to the draw-off side.

2. Process according to Claim 1, characterized in that an underpressure is produced in the mould cavity after complete postfoaming for a predetermined residence period.

3. Process according to Claim 2, characterized in that the foamed model is briefly heat-treated in a heat channel.

4. Process according to one of Claims 1 to 3, characterized in that drawing off takes place when the heat transfer medium is introduced and/or after complete postfoaming by attaining an underpressure of between 300 mbar and 800 mbar in the mould cavity.

**Revendications**

1. Procédé pour fabriquer des modèles de coulée perdus consistant en des perles en mousse expansée, pour la coulée en moules pleins, de préférence pour la production de pièces moulées en série, dans lequel un produit de base constitué de microperles, renfermant un agent porogène et non soumis à moussage, en particulier du polystyrène, fait l'objet d'un moussage préalable, et dans lequel les perles de mousse, soumises à moussage préalable, sont introduites dans un moule de moussage qui correspond, de préférence, à la configuration de la pièce moulée devant être produite, puis sont chauffées et soumises à un post-moussage, dans ledit moule, par admission d'un agent caloporteur consistant notamment en de la vapeur, caractérisé par le fait que, au cours de chaque processus de moulage par moussage, lors de l'introduction de l'agent caloporteur, une dépression est engendrée sur un côté aspiration, opposé au côté introduction, de la cavité de moulage du moule de moussage, et l'agent caloporteur est ainsi aspiré ; le côté introduction et le côté aspiration sont interchangés répétitivement et il est procédé à une aspiration, après le changement, au maximum jusqu'à ce qu'un agent caloporteur frais et substantiellement pur se présente côté aspiration.

2. Procédé selon la revendication 1, caractérisé par le fait qu'une dépression est engendrée dans la cavité de moulage, pour une durée de séjour prédéterminée, une fois le post-moussage achevé.

3. Procédé selon la revendication 2, caractérisé par le fait que le modèle venu de moussage est malléabilisé un court instant dans un canal thermique.

4. Procédé selon l'une des revendications 1 à 3, caractérisé par le fait que l'aspiration a lieu lors de l'introduction de l'agent caloporteur et/ou après l'achèvement du post-moussage, par obtention d'une dépression comprise entre 300 mbar et 800 mbar dans la cavité de moulage.